# EUROPÄISCHE PATENTSCHRIFT

(11) **EP 0 514 429 B1**
(45) Veröffentlichungstag und Bekanntmachung des Hinweises auf die Patenterteilung: **09.11.1994**
(21) Anmeldenummer: 91903618.6
(22) Anmeldetag: 05.02.1991
(51) Int. Cl.: B29C 45/42, B29C 45/80

(54) **VERFAHREN UND VORRICHTUNG ZUM STEUERN DER BEWEGUNGEN EINER SPRITZGIESSFORM UND EINES HANDLINGGERÄTES**
PROCESS AND DEVICE FOR CONTROLLING THE MOVEMENTS OF AN INJECTION MOULD AND A HANDLING DEVICE
PROCEDE ET DISPOSITIF POUR LA COMMANDE DES MOUVEMENTS D'UN MOULE A INJECTION ET D'UN DISPOSITIF DE MANIPULATION

(30) Priorität: 05.02.1990 DE 4003372
(43) Veröffentlichungstag der Anmeldung: 25.11.1992
(73) Patentinhaber: HERBST, Richard, D-85386 Eching (DE)
(72) Erfinder: HERBST, Richard, D-85386 Eching (DE)
(74) Vertreter: Witte, Alexander, Dr.-Ing.
(86) Internationale Anmeldenummer: EP9100221
(87) Internationale Veröffentlichungsnummer: WO9111314

## Beschreibung

Die Erfindung betrifft ein Verfahren gemäß dem Oberbegriff des Anspuchs 1, sowie eine Vorrichtung zur Durchführung des Verfahrens.

Spritzgießmaschinen und ähnliche Vorrichtungen zum Formen von Formteilen aus Kunststoff oder aus anderen Werkstoffen werden häufig in Verbindung mit einem Handlinggerät, Roboter, Manipulator od. dgl. betrieben. Das Handlinggerät od. dgl. hat ein Greifwerkzeug, welches zwischen die Formhälften der geöffneten Form ein- und wieder ausgefahren werden kann, um das Formteil aus der Form zu entnehmen. Die Öffnungs- und Schließbewegungen der Form und die Einfahr- und Ausfahrbewegungen des Greifwerkzeuges müssen sorgfältig aufeinander abgestimmt werden, damit Kollisionen und Beschädigungen auch in Störfällen sicher vermieden werden, andererseits aber keine unnötigen Zeitverluste auftreten.

Aus "Patent Abstracts of Japan", Band 11, Nr. 316, M 631, ist eine Steuerung für das Greifwerkzeug einer Spritzgießmaschine bekannt, bei dem die Position der beweglichen Spritzgießform laufend erfaßt und als Stellgröße in einem die Position des Greifwerkzeugs steuernden Regelkreis verwendet wird. In einem Zusatzregelkreis, der die Geschwindigkeit des Greifwerkzeugs steuert, dienen die Positionsabweichungen des Greifwerkzeugs und die Sollgeschwindigkeit der beweglichen Form als Stellgrößen. Diese Steuervorrichtung ist aufwendig, da sie eine ständige Positions- und Geschwindigkeitserfassung der beweglichen Form und einen geschwindigkeitsgeregelten Antrieb für das Greifwerkzeug voraussetzt. Aus JP-A-62- 273816 (Patent Abstracts of Japan, Band 12, Nr 152, M695) ist eine Spritzgießmaschine bekannt, deren Greifwerkzeug eine Hub- und Einfahrbewegung senkrecht zur Formöffnungsbewegung und anschließend eine Mitbewegung mit der sich öffnenden Formhälfte durchführt. Die Hub- und Einfahrbewegung beginnen zeitgleich mit dem Öffnungsbeginn der Form, die Mitfahrbewegung wird in Abhängigkeit von der Öffnungsgeschwindigkeit der Form gesteuert. Auch diese Steuervorrichtung ist kompliziert und aufwendig, da sie ein in drei Raumrichtungen bewegliches Greifwerkzeug und einen geschwindigkeitsregelbaren Antrieb für die Mitfahrbewegung des Greifwerkzeuges erfordert. Wollte man das Prinzip dieser bekannten Steuerungen auch auf die Ausfahrbewegung des Greifwerkzeuges und die Schließbewegung der Form anwenden, wären noch kompliziertere Einrichtungen zur laufenden Geschwindigkeitssteuerung des Schließantriebs des Spritzgießwerkzeugs erforderlich.

Es ist bekannt, Kollisionen zwischen mit im wesentlichen konstanter, und voneinander unabhängiger Geschwindigkeit bewegten Werkzeugen, wie z. B. Formwerkzeug und Greifwerkzeug, dadurch zu vermeiden, daß man im Weg des Formwerkzeugs und des Greifwerkzeugs jeweils einen Positionsgeber anordnet, der ein Freigabesignal erzeugt, wenn das betreffende Werkzeug bei seiner Öffnungs- oder Ausfahrbewegung eine solche Position erreicht hat, bei der die Einfahr- bzw. Schließbewegung des anderen Werkzeugs gefahrlos begonnen und mit vorgegebener Geschwindigkeit zuende geführt werden kann. Die Position, an der das Freigabesignal erzeugt wird, braucht nicht die Endstellung z. B. des Öffnungshubes des Formwerkzeuges sein, es muß aber sichergestellt werden, daß das Formwerkzeug bei der Erzeugung des Freigabesignals bereits einen Teil seines Öffnungsweges zu rückgelegt und eine solche Stellung erreicht hat, daß selbst dann, wenn das Formwerkzeug infolge einer Störung in dieser Stellung hängen bleibt, der Greifer seine durch das Freigabesignal ausgelöste Einfahrbewegung ohne Gefahr einer Beschädigung zuendeführen kann. Analog gibt das Greifwerkzeug beim Ausfahren aus dem Bereich des Formwerkzeuges ein Freigabesignal zum Schließen des Formwerkzeuges. Auch dieser Signalpunkt muß so gelegt sein, daß bei langsamer Fahrt oder beim Stehenbleiben des Greifwerkzeuges in dieser Position eine Beschädigung beim Schließen des Formwerkzeuges ausgeschlossen ist.

Aufgrund dieser Sicherheitsmaßnahmen kann die Bewegung des einen Werkzeuges positionsabhängig immer erst dann freigegeben werden, wenn das andere Werkzeug bereits einen beträchtlichen Teil seines Bewegungshubes zurückgelegt hat. Hinzu kommt, daß sowohl die Erzeugung des Freigabesignals als auch die von diesem ausgelöste Bewegung jeweils mit einer unvermeindlichen Verzögerung erfolgt, die durch die Ansprechzeiten der Positionssensoren, die Schaltzeiten der auf die Positionssignale ansprechenden Schaltelemente und die Arbeitszeiten der anzusteuernden elektrischen, hydraulischen oder pneumatischen Stellglieder bedingt ist. Diese summieren sich zu erheblichen Zeitverlusten, die zu Lasten der Taktgeschwindigkeit der Spritzgießmaschine od.dgl. gehen.

Der Erfindung liegt die Aufgabe zugrunde, ein Verfahren und eine Vorrichtung der angegebenen Art so auszubilden, daß die Bewegungsvorgänge mit geringeren Totzeiten und in günstigerer zeitlicher Überlappung durchgeführt werden können, ohne daß dadurch die Gefahr von Beschädigungen im Störfalle erhöht wird.

Diese Aufgabe wird durch ein Verfahren mit den Merkmalen des Patentanspruchs 1 und durch eine Vorrichtung zur Durchführung des Verfahrens mit den Merkmalen des Patentanspruchs 3 gelöst. Die Unteransprüche beziehen sich auf vorteilhafte Ausgestaltungen des erfindungsgemäßen Verfahrens und der Vorrichtung zu seiner Durchführung.

Erfindungsgemäß wird nicht nur die Position, sondern zusätzlich die Geschwindigkeit des bewegten Werkzeuges als Kriterium für die Erzeugung des Freigabesignals für das andere Werkzeug herangezogen. Das Freigabesignal wird nur dann erzeugt, wenn das bewegte Werkzeug beim Durchlaufen der Signalgabeposition eine dem ordnungsgemäßen Betrieb entsprechende Geschwindigkeit hat. Bei zu niedriger - oder eventuell auch zu hoher - Geschwindigkeit liegt ein gestörter Betrieb vor, und die Erzeugung des Freigabesignals für das andere Werkzeug unterbleibt. Hierdurch wird es möglich, das Freigabesignal bereits an einem früheren Zeitpunkt des Bewegungshubes des Werkzeuges zu erzeugen, als dies bisher möglich war, insbesondere bereits an einer Position, in der das Werkzeug die Bewegungsbahn des anderen Werkzeuges noch nicht vollständig freigegeben hat. Die Feststellung, daß das Werkzeug diese Position mit ordnungsgemäßer Geschwindigkeit durchläuft, bietet eine hinreichende Sicherheit dafür, daß das Werkzeug auch den restlichen Teil seines Bewegungshubes ordnungsgemäß zurücklegen und dadurch rechtzeitig die Bewegungsbahn des anderen Werkzeuges freimachen wird.

In weiterer Ausgestaltung der Erfindung kann auch eine wiederholte oder kontinuierliche Überwachung der Positionen und Geschwindigkeiten beider Werkzeuge erfolgen, und durch rechnerische Extrapolation kann festgestellt werden, ob die beiden Bewegungen kollisionsfrei ablaufen werden. Bei Kollisionsgefahr kann der Rechner eine entsprechende Beeinflussung, d.h. Abbruch, Bremsung oder Beschleunigung, einer oder beider Bewegungen steuern.

Eine Ausführungsform der Erfindung wird anhand der Zeichnungen erläutert. Es zeigt :
- Fig. 1-3: schematisch ein Formwerkzeug einer Spritzgießmaschine und ein Greifwerkzeug eines Handlingsgerätes in verschiedenen Relativstellungen zueinander;
- Fig. 4: Zeit-Wegdiagramme der beiden Werkzeuge;
- Fig. 5: ein anderes Zeit-Wegdiagramm der beiden Werkzeuge zur Veranschaulichung der Kollisionsüberwachung.

Die Erfindung wird nachfolgend anhand einer Spritzgießvorrichtung für Kunststoffe erläutert, ist aber prinzipiell bei beliebigen Formmaschinen mit einem zwischen die Formwerkzeuge zu bewegenden Greifwerkzeug anwendbar.

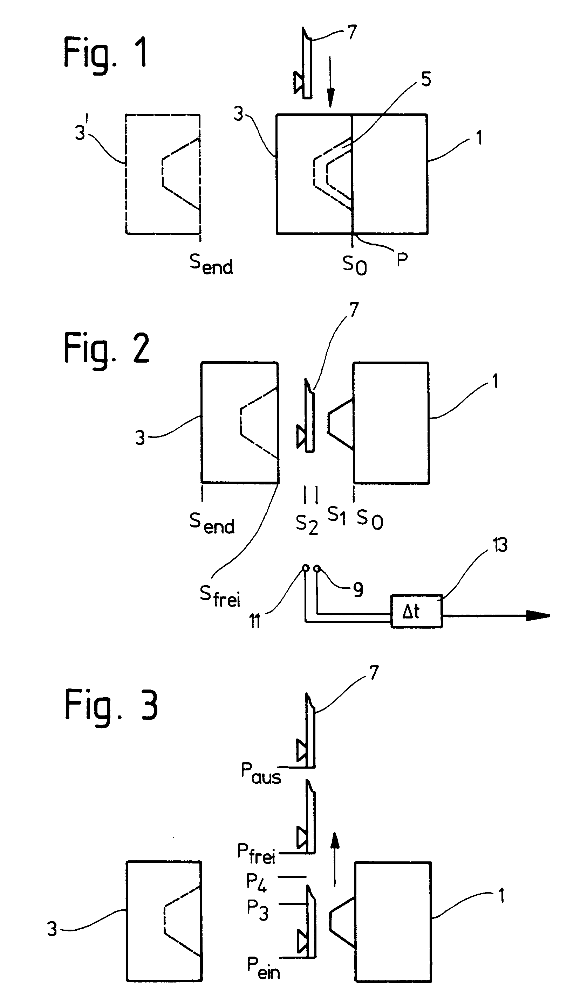

Gemäß Fig. 1 besteht eine Spritzgießform aus zwei Formhälften oder Formwerkzeugen 1 und 3, die in der gezeigten geschlossenen Stellung einen Formhohlraum 5 zur Herstellung eines z.B. hohlkörperförmigen Formteils umschließen. Mindestens das Formwerkzeug 3 ist beweglich und kann zum Öffnen der Form mittels nicht dargestellter Antriebseinrichtungen in die strichpunktiert angedeutete Öffnungsstellung 3' verschoben werden. Ein beliebiger Referenzpunkt P des Formwerkzeuges 3 legt dabei die Strecke von der Ausgangsposition S_{O} bis zur Endposition S_{end} zurück, bzw. beim Schließhub die umgekehrte Strecke von S_{end} bis S_{O}. Ein Greifwerkzeug 7, das zu einem (nicht dargestellten) Handlinggerät, Roboter, Manipulator od.dgl. gehört, kann bei geöffneter Form zwischen die Formwerkzeuge 1, 3 eingefahren werden, um das Formteil, das z.B. mittels Auswerfern aus dem Formwerkzeug 3 ausgestoßen wird, zu ergreifen und einer weiteren Behandlung zuzuführen.

Wie in Fig. 2 dargestellt, darf das Greifwerkzeug 7 erst dann eingefahren werden, wenn die Formhälfte 3 zwar noch nicht ihre Endstellung S_{end}, wohl aber eine Zwischenstellung erreicht hat, in der der Einfahrweg für das Greifwerkzeug 7 freigegeben ist. Diese Stellung ist in Fig. 2 mit S_{frei} angedeutet. Bei dem bisher üblichen Verfahren wird der Antrieb für das Einfahren des Greifwerkzeuges erst dann gestartet, wenn das Formwerkzeug 3 die Stellung S_{frei} erreicht hat und in dieser Stellung ein Startsignal für das Greifwerkzeug 7 erzeugt wird.

Erfindungsgemäß wird jedoch die Position des beweglichen Formwerkzeuges 3 nicht erst in der Stellung S_{frei} erfaßt, sondern bereits an zwei davorliegenden Positionen, die in Fig. 2 bei S₁ und S₂ schematisch angedeutet sind. Diesen Positionen S₁, S₂ sind geeignete Signalgeber 9, 11 zugeordnet, mit denen die Positionen S₁ und S₂ des beweglichen Formwerkzeuges 3 erfaßt werden. Die Art dieser Sensoren ist beliebig und dem Fachmann geläufig, es kann sich z.B. um mechanisch betätigte elektrische Schalter, berührungslose Schalter, Lichtschranken, digitale Weggeber od.dgl. handeln. Die Erfassung der Positionen S₁ und S₂ kann auch mit Einrichtungen erfolgen, die dem pneumatischen oder hydraulischen Antriebssystem für das Formwerkzeug zugeordnet sind.

Die beiden Sensoren 9, 11 sind an ein Auswertegerät 13 angeschlossen, in welchem das Zeitintervall Δt erfaßt werden kann, welches zwischen den von den Sensoren 9 und 11 erzeugten Signalen liegt. Dieses Zeitintervall Δt, in welchem das Formwerkzeug 3 die Strecke von S₁ nach S₂ durchläuft, ist ein Maß für die Geschwindigkeit des Formwerkzeuges beim Durchlaufen der Position S₂. Dieses Zeitintervall Δt wird mit vorgegebenen Grenzen eines Sollwertbereiches verglichen, und in einer Ausgangsleitung 13 wird ein Freigabesignal zu dem Zeitpunkt erzeugt, an welchem das Formwerkzeug 3 die Position S₂ durchläuft, jedoch nur unter der Voraussetzung, daß das gemessene Zeitintervall Δt, und damit die Geschwindigkeit des Formwerkzeuges 3, in dem vorgegebenen Sollbereich liegt. Durch das Freigabesignal wird der Beginn der Einfahrbewegung des Greifwerkzeuges 7 ausgelöst.

Wie in Fig. 2 angedeutet, wird es durch das erfindungsgemäße Verfahren möglich, das Freigabesignal bereits bei der Position S₂ des Formwerkzeuges 3 zu erzeugen, obwohl zu diesem Zeitpunkt das Formwerkzeug 3 den Einfahrweg für das Greifwerkzeug 7 noch nicht vollständig freigemacht hat, d.h. die Stellung S_{frei} noch nicht erreicht hat. Würde aufgrund einer Störung das Formwerkzeug in der Position S₂ stehenbleiben, so wäre eine Beschädigung des Greifwerkzeuges 7 die Folge. Die Messung des Zeitintervalls Δt gibt aber die Gewähr dafür, daß das Freigabesignal in der Position S₂ nur dann erzeugt wird, wenn sich das Formwerkzeug 3 mit einer dem Normalbetrieb entsprechenden Geschwindigkeit bewegt. Es kann dann, schon aufgrund der Massenträgheit, davon ausgegangen werden, daß das Formwerkzeug 3 auch im Falle einer Störung noch mindestens die Wegstrecke von S₂ nach S_{frei} zurücklegen wird, so daß es nicht zu einer Beschädigung beim Einfahren des Greifwerkzeuges 7 kommen kann.

Fig. 3 erläutert, wie in analoger Weise beim Ausfahrhub des Greifwerkzeuges 7 das Freigabesignal für die Schließbewegung des Formwerkzeuges 3 erzeugt wird. Das Greifwerkzeug 7 bewegt sich aus der vollständig eingefahrenen Stellung Pₑᵢₙ in die vollständig ausgefahrene Stellung Pₐᵤₛ und durchläuft dabei eine Stellung P_{frei}, in welcher der Schließweg für das Formwerkzeug 3 vollständig freigegeben ist, so daß das Formwerkzeug 3 gefahrlos in die Schließstellung (Fig. 1) bewegt werden kann. Gemäß dem Stand der Technik wird ein Startsignal für die Schließbewegung des Formwerkzeuges 3 erst dann erzeugt, wenn das Greifwerkzeug 7 die Stellung S_{frei} erreicht hat. Erfindungsgemäß werden jedoch schon vor Erreichen der Stellung P_{frei} zwei Positionen P₃ und P₄ des Greifwerkzeuges 7 mittels geeigneter (in Fig. 3 nicht dargestellter) Sensoren erfaßt, und aus den Signalen der Sensoren wird das Zeitintervall Δt ermittelt, in welchem das Greifwerkzeug 7 die Strecke von P₃ nach P₄ zurücklegt. Liegt dieses Intervall Δt, und damit die Geschwindigkeit des Greifwerkzeuges 7, in dem für den Normalbetrieb charakteristischen Sollwertbereich, so kann bereits in der Stellung P₄ des Greifgerätes 7 ein Freigabesignal für den Beginn der Schließbewegung des Formwerkzeuges 3 erzeugt werden. Die am Punkt P₄ festgestellte, ordnungsgemäße Geschwindigkeit des Greifwerkzeuges 7 bietet die Gewähr dafür, daß das Greifwerkzeug auch den restlichen Weg bis mindestens in die Stellung P_{frei} zurücklegen und die Schließbewegung des Formwerkzeuges 3 nicht behindern wird.

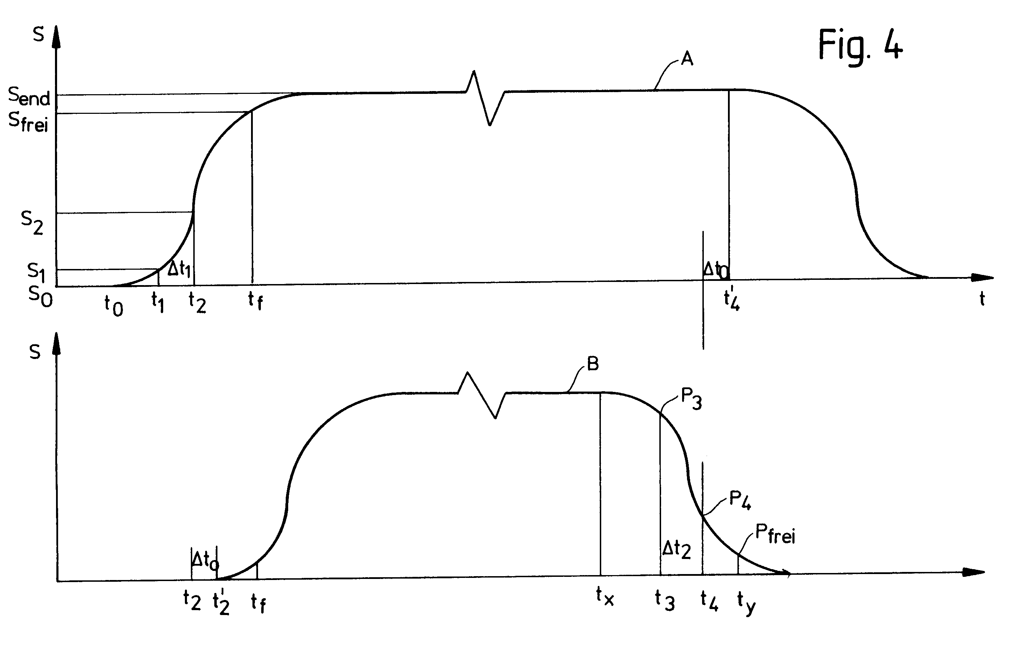

Fig. 4 zeigt schematische Weg-Zeitdiagramme, wobei die Kurve A den Öffnungs- und Schließhub des Formwerkzeuges 3 und die Kurve B den Einfahr- und Ausfahrhub des Greifwerkzeuges 7 wiedergeben soll. Das Formwerkzeug 3 beginnt im Zeitpunkt t₀ seinen Öffnungshub bis in die Endstellung S_{end} und durchläuft dabei zu den Zeitpunkten t₁ und t₂ die durch Sensoren erfaßten Positionen S₁ und S₂. Das Zeitintervall Δt₁ zwischen den Zeitpunkten t₁ und t₂ wird erfaßt und mit Sollwerten verglichen. Liegt das Zeitintervall im Sollwertbereich, so wird im wesentlichen zum Zeitpunkt t₂ ein Freigabesignal für den Start der Bewegung des Greifwerkzeuges 7 erzeugt. Für das Auslösen der Bewegung des Greifwerkzeuges wird eine unvermeidliche, konstante Schaltzeit Δt₀ benötigt, so daß die Einfahrbewegung des Greifwerkzeuges 7 zu einem Zeitpunkt t'₂ gestartet wird. Dieser Zeitpunkt t'₂ kann aber deutlich vor dem Zeitpunkt t_{f} liegen, an welchem das Formwerkzeug (Kurve A) die Position S_{frei} (s. Fig. 2) durchläuft, in der es das Einfahren des Greifwerkzeuges nicht mehr behindert.

Beim Ausfahrhub des Greifwerkzeuges 7, der im Zeitpunkt tₓ beginnt, durchläuft das Greifwerkzeug die mittels Sensoren erfaßten Positionen P₃ und P₄, und in Abhängigkeit von dem dazwischen durchlaufenden Zeitintervall Δt₂ wird im Zeitpunkt t₄ ein Freigabesignal erzeugt, welches wiederum nach einer entsprechenden Schaltzeit Δt₀ zum Zeitpunkt t'₄ den Beginn des Schließhubes des Formwerkzeuges 3 steuert. Auch dieser Zeitpunkt t'₄ liegt vor dem Zeitpunkt t_{y}, an welchem das Greifwerkzeug 7 in der Stellung P_{frei} (s. Fig. 3) die Bewegungsbahn des Formwerkzeuges 3 völlig freigegeben hat. Man erkennt, daß die Erfindung, ohne Einbuße an Betriebssicherheit, eine sehr günstige zeitliche Überlappung und optimale gegenseitige Anpassung der Bewegungsvorgänge ermöglicht.

Abänderungen der beschriebenen Ausführungsform sind im Rahmen der Erfindung möglich. So kann die Positions- und Geschwindigkeitserfassung in anderer Weise als beschrieben erfolgen. Z.B. kann anstelle von ortsfesten Positionssignalgeber ein am beweglichen Teil, wie Formhälfte 3 oder Greifwerkzeug 7, angeordneter Positionsdetektor verwendet werden, der zwei oder mehr ortfest angeordnete Wegmarken, evtl. auch stetige Folge von Weginkrementen detekiert bzw. abtastet. Anstelle einer Messung des Zeitintervalles zwischen zwei Positionen kann auch eine direkte Geschwindigkeitsmessung durch entsprechende Geschwindigkeitssensoren vorgenommen werden. Man kann somit z.B. in Fig. 2 einen der beiden Positionsgeber 9, 11 weglassen und dem anderen Positionsgeber einen zusätzlichen Geschwindigkeitssensor zuordnen.

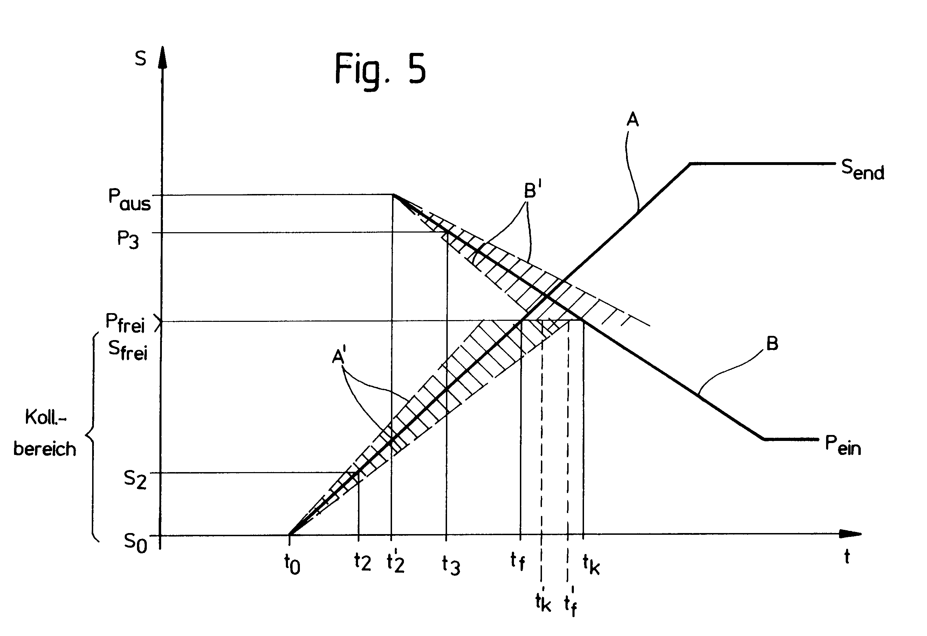

In weiterer Ausgestaltung der Erfindung kann eine fortlaufende Positions- und Geschwindigkeitsüberwachung beider Werkzeuge während ihrer gesamten Bewegung erfolgen. An beliebigen Zwischenpositionen, die eines der Werkzeuge erreicht, kann abgefragt werden, ob das jeweils andere Werkzeug die für den ordnungsgemäßen Bewegungsablauf erforderliche Position und Geschwindigkeit hat. Zur Erläuterung wird auf Fig. 5 verwiesen. Hier ist ähnlich wie in Fig. 4 das Zeit-Wegdiagramm für die Öffnungsbewegung der Form (Kurve A) und für die Einfahrbewegung des Greifwerkzeuges (Kurve B) dargestellt, wobei diese Bewegungen, die in Wirklichkeit rechtwinklig zueinander verlaufen, hier gegenläufig dargestellt sind, um die Kollisionsmöglichkeit anschaulich zu machen.

Gemäß Fig. 5 beginnt das Formwerkzeug im Zeitpunkt t₀ seinen Öffnunghub bis in die Endstellung S_{end} und durchläuft dabei zum Zeitpunkt t_{f} die Freigabestellung S_{frei}, von der ab es die Einfahrbewegung des Greifwerkzeuges nicht mehr behindern kann. Die Wegstrecke von S₀ bis S_{frei} ist der Kollisionsbereich. Solange sich das Formwerkzeug noch in diesem Bereich befindet, sind Kollisionen mit dem einfahrenden Greifwerkzeug möglich. An der Position S₂ zum Zeitpunkt t₂ wird eine Positions- und Geschwindigkeitsmessung des bewegten Formwerkzeuges durchgeführt und in Abhängigkeit vom Meßergebnis wird nach einer Zeitverzögerung Δₜ zum Zeitpunkt t₂' das Freigabesignal für die Einfahrbewegung des Greifwerkzeuges ausgelöst. Dieses bewegt sich dabei aus der ausgefahrenen Stellung Pₐᵤₛ in die völlig eingefahrene Stellung Pₑᵢₙ und durchläuft zum Zeitpunkt tₖ die Stellung P_{frei}, an welcher der Bereich möglicher Kollisionen mit dem Formwerkzeug beginnt. Da das Formwerkzeug bereits vorher zum Zeitpunkt t_{f} den Kollisionsbereich verlassen hat, tritt eine Kollision nicht auf. Der Auslösezeitpunkt t₂' für die Einfahrbewegung des Greifwerkzeuges kann erfindungsgemäß so gewählt werden, daß der Zeitpunkt tₖ mit Sicherheit, aber möglichst knapp nach dem Zeitpunkt t_{f} liegt.

In der Realität sind die Bewegungen zeitlich nicht exakt festlegbar, sondern haben einen Toleranzbereich, der in Fig. 5 durch die gestrichelten Geraden A' für das Formwerkzeug bzw. B' für das Greifwerkzeug angedeutet ist. Durch Abweichungen in diesem Toleranzbereich können sich die Zeitpunkte t_{f} und tₖ verschieben, z.B. nach t_{f}' und tₖ', so daß das Greifwerkzeug mit dem Formwerkzeug kollidieren kann. Um dies mit Sicherheit auszuschließen, könnte man den Zeitpunkt t₂', an welchem die Einfahrbewegung des Greifwerkzeuges ausgelöst wird, entsprechend spät legen, wodurch aber der mit der Erfindung erzielte Vorteil teilweise wieder verlorengehen würde. Um mit möglichst früher Auslösung der Einfahrbewegung des Greifwerkzeuges, d.h. mit möglichst großer zeitlicher Überlappung der beiden Bewegungen arbeiten zu können, ist gemäß einer Ausführungsform der Erfindung vorgesehen, die Position und Geschwindigkeit mindestens des Formwerkzeuges zumindestens einem weiteren Zeitpunkt t₃ erneut zu messen. Besonders vorteilhaft ist es, wenn diese Messung dann ausgelöst wird, wenn das Greifwerkzeug eine durch Positionsgeber erfaßbare Zwischenstellung P₃ erreicht hat. Dies bedeutet mit anderen Worten, daß das Greifwerkzeug bei Durchlaufen der Position P₃ die Position und Geschwindigkeit des Formwerkzeugs zum Zeitpunkt t₃ "abfragt". Dies kann zu weiteren Zeitpunkten wiederholt werden, bzw. auch kontinuierlich während der gesamten Bewegung von Formwerkzeug und Greifwerkzeug vor Erreichen der Position P_{frei} erfolgen. Die abgefragten Meßwerte werden dann einem Rechner zugeführt, der anhand der erfaßten Positionen und Geschwindigkeiten die Bewegungen des Formwerkzeuges und Greifwerkzeuges extrapoliert und feststellt, ob eine Kollision mit hinreichender Sicherheit vermieden wird oder ob mittels vom Rechner erzeugter Signale in die Steuerung der beiden Bewegungen eingegriffen werden muß.

## Patentansprüche

1. Verfahren zum Steuern der Bewegungen zweier Werkzeuge einer Formmaschine, nämlich eines Formwerkzeuges, das einen Öffnungshub zum Öffnen bzw. Schließen der Form ausführt, und eines in die geöffnete Form ein- und ausfahrbaren Greifwerkzeuges für das Entnehmen des geformten Werkstücks, wobei während der Bewegung eines der Werkzeuge, nämlich während des Öffnungshubes des Formwerkzeuges oder der Ausfahrbewegung des Greifwerkzeuges, ein positionsabhängiges Freigabesignal als Startsignal für die Bewegung des anderen Werkzeuges, nämlich für das Einfahren des Greifwerkzeuges oder den Schließhub des Formwerkzeuges, erzeugt wird, dadurch **gekennzeichnet,** daß vor der Erzeugung des Freigabesignals die Bewegungsgeschwindigkeit des bewegten Werkzeuges an mindestens einer Zwischenposition seiner Bewegung gemessen wird, und daß das Freigabesignal nur dann erzeugt wird, wenn die gemessene Geschwindigkeit in einem Sollbereich liegt.

2. Verfahren nach Anspruch 1 , dadurch **gekennzeichnet,** daß das Freigabesignal geschwindigkeitsabhängig bereits vor dem Zeitpunkt erzeugt wird, an dem das sich bewegende Werkzeug, d.h. das Formwerkzeug bei seinem Öffnungshub oder das Greifwerkzeug bei seinem Ausfahrhub, diejenige Stellung erreicht hat, bei der es die Bewegung des jeweils anderen Teils nicht mehr behindern kann.

3. Verfahren nach Anspruch 1, dadurch **gekennzeichnet,** daß an mindestens einer weiteren Zwischenposition des bewegten Werkzeuges eine weitere Geschwindigkeitsmessung erfolgt, und daß ein Signal zum Beeinflussen der bereits begonnenen Bewegung des anderen Werkzeugs ausgelöst wird, wenn die gemessene Geschwindigkeit nicht in einem Sollbereich liegt.

4. Verfahren nach Anspruch 3, dadurch **gekennzeichnet,** daß die weitere Geschwindigkeitsmessung dann eingeleitet wird, wenn das andere Werkzeug eine vorgegebene Zwischenposition seiner Bewegung erreicht hat.

5. Verfahren nach einem der Ansprüche 1 bis 4, dadurch **gekennzeichnet,** daß eine laufende Überwachung der Bewegungen beider Werkzeuge nach Position und Geschwindigkeit erfolgt, daß die gemessenen Werte einem Rechner zugeführt werden, daß mittels des Rechners durch rechnerische Extrapolation festgestellt wird, ob die Bewegungen kollisionsfrei verlaufen, und daß, wenn dies nicht der Fall ist, ein Steuersignal zur Beeinflussung der Bewegung des einen und/oder anderen Werkzeuges erzeugt wird.

6. Vorrichtung zur Durchführung des Verfahrens nach Anspruch 1, mit einem Formwerkzeug, das über einen Öffnungshub bewegbar ist, um die Form zu öffnen,
einem Greifwerkzeug, das in die geöffnete Form einfahrbar ist, um das geformte Werkstück aufzunehmen,
mindestens einem im Öffnungsweg des Formwerkzeugs und/oder im Ausfahrweg des Greifwerkzeuges angeordneten Positionssignalgeber,
und einer Steuereinrichtung, die das Signal von dem Positionssignalgeber empfängt und in Abhängigkeit von diesem Signal den Antrieb für die Einfahrbewegung des Greifwerkzeugs und/oder für den Schließhub des Formwerkzeuges steuert,
dadurch **gekennzeichnet,** daß dem Positionssignalgeber eine Einrichtung zum Messen der Geschwindigkeit des Formwerkzeugs bzw. Greifwerkzeugs zugeordnet ist, daß eine Auswerteeinrichtung (13) vorgesehen ist, die die erfaßte Geschwindigkeit mit mindestens einem Sollwert vergleicht und in Abhängigkeit von dem Vergleich das Freigabesignal für den Antrieb erzeugt.

7. Vorrichtung nach Anspruch 6, dadurch **gekennzeichnet,** daß Einrichtungen zum Messen der Geschwindigkeit an mehreren Zwischenposition der Bewegungsstrecke der Werkzeuge vorgesehen sind.

8. Vorrichtung nach Anspruch 7, dadurch **gekennzeichnet,** daß die Messung der Geschwindigkeit des einen Werkzeuges durch vom anderen Werkzeug an Zwischenpositionen seiner Bewegungsstrecke erzeugte Signal auslösbar ist.

9. Vorrichtung nach Anspruch 7 oder 8, dadurch **gekennzeichnet,** daß ein Rechner (13) vorgesehen ist, der anhand der wiederholt oder laufend gemessenen Positionen und Geschwindigkeiten den Bewegungsablauf auf Kollisionsfreiheit überprüft.

## Claims

1. A process for controlling the movements of two tools of a molding machine, namely a molding tool executing an opening stroke for opening and closing the mold, respectively, and a gripping tool adapted to be extended into the open mold and withdrawn therefrom for removing the molded workpiece, a position-dependent release signal being generated during the movement of one of the tools, namely during the opening stroke of the molding tool or the withdrawing movement of the gripping tool, as a starting signal for the movement of the other tool, namely for the extending of the gripping tool or the closing stroke of the molding tool, characterized in that before generating the release signal, the movement speed of the moved tool is measured and at least one intermediate position of its movement, and that the release signal is generated only if the measured speed lies in a reference range.

2. The process of claim 1, characterized in that the release signal is generated speed-dependently already before the point in time at which the moving tool, i.e. the molding tool in the case of its opening stroke or the gripping tool in case of its withdrawing stroke, has reached that position at which it can no longer hinder the movement of what is respectively the other part.

3. The process of claim 1, characterized in that a further speed measurement takes place at at least one further intermediate position of the moved tool, and that a signal for influencing the already commenced movement of the other tool is triggered if the measured speed does not lie in a reference range.

4. The process of claim 3, characterized in that the further speed measurement is initiated when the other tool has reached a predetermined intermediate position of its movement.

5. The process of any of claims 1 to 4, characterized in that a continuous monitoring of the movements of the two tools according to position and speed takes place, that the measured values are fed to a computer, that it is established by means of the computer, by computational extrapolation, whether the movements will proceed collision-freely, and that, if this is not the case, a control signal for influencing the movement of the one and/or other tool is generated.

6. An apparatus for carrying out the process of claim 1, comprising a molding tool adapted to be moved along an opening stroke in order to open the mold,
a gripping tool adapted to be extended into the open mold in order to receive the molded workpiece,
at least one position signal transmitter arranged in the opening travel of the molding tool and/or in the withdrawing travel of the gripping tool,
and a control means for receiving the signal from the position signal transmitter and, dependent on this signal, controlling the drive for the extending movement of the gripping tool and/or for the closing stroke of the molding tool,
characterized in that the position signal transmitter is assigned a means for measuring the speed of the molding tool or gripping tool, respectively, and that an evaluation means (13) is provided comparing the sensed speed with at least one reference value and, dependent on the comparison, generating the release signal for the drive.

7. The apparatus of claim 6, characterized in that means are provided for measuring the speed at a plurality of intermediate positions of the movement path of the tools.

8. The apparatus of claim 7, characterized in that the measurement of the speed of the one tool can be triggered by a signal generated by the other tool at intermediate positions of its movement path.

9. The apparatus of claim 7 or 8, characterized in that a computer (13) is provided checking the movement sequence for collision freedom on the basis of the repeatedly or continuously measured positions and speeds.

## Revendications

1. Procédé pour la commande des mouvements de deux organes d'une machine à mouler, à savoir d'un organe de moulage qui effectue une course d'ouverture pour ouvrir ou fermer le moule et d'un organe de préhension susceptible d'être introduit et retiré du moule ouvert en vue du prélèvement de la pièce moulée, dans lequel pendant le mouvement de l'un des organes, à savoir pendant la course d'ouverture de l'organe de moulage ou le mouvement de sortie de l'organe de préhension, un signal de libération dépendant de la position est émis en tant que signal de départ pour le mouvement de l'autre organe, à savoir pour l'introduction de l'organe de préhension ou la course de fermeture de l'organe de moulage, caractérisé en ce que la vitesse de déplacement de l'organe mobile est mesurée avant l'émission du signal de libération en au moins une position intermédiaire de sa course, et en ce que le signal de libération n'est ensuite donné que si la vitesse mesurée est comprise dans une plage de consigne.

2. Procédé selon la revendication 1, caractérisé en ce que le signal de libération est déjà émis, en fonction de la vitesse, avant le moment où l'organe mobile, c'est-à-dire l'organe de moulage lors de sa course d'ouverture ou l'organe de préhension lors de sa course de sortie, a atteint la position dans laquelle il ne peut plus entraver le mouvement de l'autre partie.

3. Procédé selon la revendication 1, caractérisé en ce qu'une autre mesure de la vitesse est effectuée en au moins une autre position intermédiaire de l'organe mobile, et en ce qu'un signal est émis en vue d'influencer le mouvement déjà commencé de l'autre organe lorsque la vitesse mesurée n'est pas comprise dans une plage de consigne.

4. Procédé selon la revendication 3, caractérisé en ce que la mesure de vitesse supplémentaire n'est effectuée que lorsque l'autre organe a atteint une position intermédiaire de sa course mouvement.

5. Procédé selon l'une des revendications 1 à 4, caractérisé en ce que la position et la vitesse de déplacement des deux organes sont surveillées en continu, en ce que les valeurs mesurées sont transmises à un calculateur, en ce que l'on détermine par extrapolation au moyen du calculateur si les mouvements se déroulent sans collision, et en ce qu'un signal de commande est émis si ce n'est pas le cas, en vue d'agir sur le mouvement de l'un ou l'autre des organes.

6. Dispositif pour l'application du procédé selon la revendication 1, avec
un organe de moulage mobile sur une course d'ouverture, pour ouvrir le moule,
un organe de préhension susceptible d'être introduit dans le moule ouvert pour saisir la pièce moulée,
au moins un émetteur de signaux de position situé sur la course d'ouverture de l'organe de moulage et/ou sur la course de sortie de l'organe de préhension,
et un dispositif de commande qui reçoit le signal émis par l'émetteur de signaux de position et commande, en fonction de ce signal, le dispositif d'entraînement pour l'introduction de l'organe de préhension et/ou pour la course de fermeture de l'organe de moulage,
caractérisé en ce qu'un dispositif de mesure de la vitesse de l'organe de moulage ou de l'organe de préhension est associé à l'émetteur de signaux de position, en ce qu'un dispositif d'analyse (13) compare la vitesse mesurée à au moins une valeur de consigne et émet le signal de libération d'entraînement en fonction de la comparaison.

7. Dispositif selon la revendication 6, caractérisé en ce que des dispositifs de mesure de la vitesse sont prévus en plusieurs positions intermédiaires de la course des organes.

8. Dispositif selon la revendication 7, caractérisé en ce que la mesure de la vitesse de l'un des organes peut être déclenchée par le signal émis par l'autre organe lorsqu'il atteint des positions intermédiaires de sa course.

9. Dispositif selon la revendication 7 ou 8, caractérisé en ce qu'un calculateur (13) vérifie, au moyen de mesures répétées ou continues des positions et vitesses, que le mouvement se déroule sans collision.
